# EUROPÄISCHE PATENTSCHRIFT

(11) **EP 1 015 793 B1**
(45) Veröffentlichungstag und Bekanntmachung des Hinweises auf die Patenterteilung: **02.04.2003**
(21) Anmeldenummer: 98951414.6
(22) Anmeldetag: 16.09.1998
(51) Int. Cl.: F16G 13/16

(54) **Führungselement und Führungsvorrichtnug zum Führen von Leitungen mit drehbaren Anlagekörpern**
Guiding element and guiding device for guiding lines with rotatable supporting bodies
Elément et dispostif pour le guidage de lignes pourvus de corps de support tournants

(30) Priorität: 17.09.1997 DE 19740967
(43) Veröffentlichungstag der Anmeldung: 05.07.2000
(73) Patentinhaber: Kabelschlepp GmbH, 57074 Siegen (DE)
(72) Erfinder: WEHLER, Herbert, D-57290 Neunkirchen (DE); ACHS, Stephan, Raymond, Bayside, WI (US); WEBER, Willibald, D-57250 Netphen (DE)
(74) Vertreter: Kahlhöfer, Hermann, Dipl.-Phys.
(86) Internationale Anmeldenummer: EP9805887
(87) Internationale Veröffentlichungsnummer: WO99014517

(56) Entgegenhaltungen:
- EP-A- 0 745 785
- DE-A- 4 225 016
- DE-A- 19 547 215
- DE-U- 8 411 975
- US-A- 5 711 144

## Beschreibung

Die vorliegende Erfindung bezieht sich auf ein Führungselement sowie auf eine Führungseinrichtung zum Führen von Leitungen (siehe z.B. DE-A-42 25 016, dem Oberbegriff entsprechend).

Führungseinrichtungen zum Führen von Leitungen sind auch unter der Bezeichnung "Energieführungsketten" bekannt. Durch das Gebrauchsmuster G 84 11 975 U1 ist ein Ausführungsbeispiel einer Führungseinrichtung bekannt. Die Führungseinrichtung umfaßt eine Mehrzahl von gelenkig miteinander verbundenen Führungselementen. Jedes Führungselement weist einen Kanalabschnitt auf. Die Kanalabschnitte eines jeden Führungselementes bilden einen Aufnahmekanal, in dem Leitungen verlegt werden können. Zur räumlichen Trennung der Leitungen wird nach dem Gebrauchsmuster G 84 11 975 vorgeschlagen, daß der Kanalquerschnitt durch Trennelemente unterteilt wird. Eine weitere Ausgestaltung eines solchen Führungselementes ist durch die DE 195 47 215 A1 bekannt.

Eine Führungsvorrichtung hat auch die Aufgabe, die Leitungen entsprechend einem bestimmten, kinematischen Ablauf der Energieführungskette zu führen. Bei einer aus Führungselementen aufgebauten Führungsvorrichtung tritt ein Polygoneffekt auf, wodurch der im Krümmungsradiusbereich der Führungseinrichtung entstehende Polygonzug zu einer Relativverschiebung zwischen einer Leitung und den Trennelementen der Kette führt. Es ist geläufig, daß das Ausmaß der Relativverschiebung durch verschiedene Maßnahmen bekannt ist.

Durch die Relativverschiebung zwischen den Verbindungsteilen und gegebenenfalls den Trennkörpern entsteht zwischen diesen und den Leitungen eine Reibung, die zum Abrieb an Leitungen führt. Dieser Abrieb an Leitungen ist unerwünscht, da dieser zu einer Funktionsunfähigkeit der Leitung führen kann.

Nach der o.f. gattungsbildenden DE 42 25 016 ist es bekannt, ein Führungselement mit einem Kanalabschnitt, insbesondere zur Aufnahme von Leitungen, wobei der Kanalabschnitt durch zwei voneinander beabstandete, gegenüberliegende Seitenwände, die durch wenigstens ein Verbindungselement verbunden sind, begrenzt ist, mit wenigstens einem den Kanalabschnitt unterteilenden, drehbar gelagerten Anlagenkörper zu versehen. Durch den drehbar angeordneten Anlagekörper wird eine Relativbewegung zwischen dem Anlagekörper und einer Leitung, die an dem Anlagekörper anliegt, minimiert, so daß ein Abrieb der Leitung verringert werden kann.

Desweiteren ist durch die EP 0 745 785 A ein Führungselement und eine Führungseinrichtung bekannt, bei der ein drehbarer Anlagekörper in den die Seitenwände verbindenden Verbindungsteilen angeordnet sind.

Hiervon ausgehend, liegt der vorliegenden Erfindung die Aufgabe zugrunde, ein Führungselement und eine Führungseinrichtung anzugeben, bei dem bzw. bei der unterschiedlichste Unterteilungen des Kanalabschnitts mit einfachen Mitteln erreichbar sind. Ferner soll die Montagefreundlichkeit verbessert werden. Ein weiteres Ziel der Erfindung ist es, die Möglichkeit zu schaffen, Führungselemente bzw. Führungseinrichtungen so nachrüsten zu können, daß ein Abrieb von Leitungen, die in einem Führungselement bzw. in eine Führungseinrichtung geführt wird, verringert wird.

Diese Aufgabe wird durch ein Führungselement mit den Merkmalen des Anspruchs 1 bzw. eine Führungseinrichtung mit den Merkmalen des Anspruchs 14 gelöst.

Das erfindungsgemäße Führungselement weist einen Kanalabschnitt auf, der durch zwei voneinander beabstandete, gegenüberliegende Seitenwände, die durch wenigstens ein Verbindungselement verbunden sind, begrenzt. Das Führungselement weist wenigstens einen den Kanalabschnitt unterteilenden, drehbar gelagerten Anlagekörper auf. Das erfindungsgemäße Führungselement zeichnet sich durch wenigstens einen mit wenigstens einem Verbindungselement und/oder einer Seitenwand verbindbaren Adapter aus, der wenigstens einen wenigstens teilweise einen in einen Anlagekörper hineinragenden Lagerzapfen aufweist. Durch diese Ausgestaltung des erfindungsgemäßen Führungselementes wird erreicht, daß mit einfachen Mitteln eine große Variationsvielfalt der Unterteilung des Kanalabschnittes ermöglicht wird. Der Adapter und die Anlagekörper werden insbesondere durch einfache Steckverbindung miteinander verbunden, so daß der Montageaufwand der Einbringung des Adapters und der Anlagekörper in einen Kanalabschnitt eines Führungselementes vereinfacht wird. Ein weiterer Vorzug der erfindungsgemäßen Ausgestaltung des Führungselementes ist es, daß durch entsprechende Ausgestaltung der Adapter diese auch in Verbindung mit bereits vorhandenen Führungselementen montiert werden können, so daß ein verringerter Abrieb einer Leitung in einem solchen Führungselement ermöglicht wird. Der Adapter und die Anlagekörper können als Standardbauteile ausgebildet sein, so daß für Führungselemente einer vorgegebenen Breite und Höhe, die unterschiedlich ausgestalteten Seitenwände und Verbindungselemente haben, stets die gleichen Adapter und Anlagekörper verwendbar sind.

Durch die erfindungsgemäße Ausgestaltung eines Führungselementes kann sichergestellt werden, daß der Anlagekörper sich um eine Achse des Lagerzapfens verdreht. Bei unterschiedlichen Reibungsbeiwerten, die zwischen einer Leitung und einem Anlagekörper bzw. zwischen dem Anlagekörper und dem Lagerzapfen vorliegen, kann durch geeignete Wahl der Wandstärke des Anlagekörpers und/oder des Durchmessers des Lagerzapfens sichergestellt werden, daß zwischen dem Anlagekörper und der Leitung eine Relativbewegung stattfindet.

Vorzugsweise ist der Adapter so ausgebildet, daß dieser wenigstens zwei Zapfen aufweist, die im wesentlichen senkrecht zueinander verlaufen. Durch diese Ausgestaltung der Adapter wird ermöglicht, daß der Kanalabschnitt, der beispielsweise rechteckförmig im Querschnitt sein kann, in zwei im wesentlichen senkrecht zueinander liegenden Ebenen unterteilbar ist.

Nach einer weiteren vorteilhaften Ausgestaltung des Führungselementes wird vorgeschlagen, daß der Adapter so ausgestaltet ist, daß dieser wenigstens zwei Lagerzapfen aufweist, die im wesentlichen parallel zueinander verlaufen. Diese Ausgestaltung des Adapters ermöglicht eine Unterteilung des Kanalabschnitts in parallele Ebenen. Es kann auch zweckmäßig sein, daß der Adapter wenigstens zwei Zapfen aufweist, die im wesentlichen koaxial zueinander verlaufen. Ein solcher Adapter kann auch in Verbindung mit einem senkrecht zu den zwei koaxial zueinander verlaufenden Lagerzapfen ausgebildet sein, so daß ein solcher Adapter eine T-förmige Unterteilung ermöglicht. Kombinationen der Lagerzapfen im Hinblick auf den Adapter können weitere Unterteilungsmöglichkeiten schaffen. So kann der Adapter mit den Lagerzapfen beispielsweise die Form eines Kreuzes haben.

Zur Vereinfachung der Montage des Führungselementes wird vorgeschlagen, daß der Adapter form- oder kraftschlüssig mit wenigstens einem Verbindungselement verbindbar ist. Es wird vorgeschlagen, daß der Adapter wenigstens eine Haltenut aufweist, in die wenigstens ein Verbindungselement wenigstens teilweise eingreift. Die Innenkontur der Haltenut ist entsprechend der Außenkontur des Verbindungselementes ausgebildet. Diese Ausgestaltung des Adapters ermöglicht auch ein Positionieren desselben auf dem Verbindungselement durch Verschieben des Adapters in Längsrichtung des Verbindungselementes.

Gemäß einer weiteren vorteilhaften Ausgestaltung des Führungselementes wird vorgeschlagen, daß alternativ oder zusätzlich zu der Haltenut der Adapter wenigstens einen Vorsprung aufweist, der wenigstens teilweise in eine Ausnehmung eines Verbindungselementes eingreift.

Die Ausgestaltung des Vorsprungs und der Haltenut kann entsprechend den bereits bekannten Formen und Geometrien der Verbindungselemente ausgestaltet sein. Dies ermöglicht eine Nachrüstbarkeit bereits vorhandener Führungselemente mit Adaptern und Anlagekörpern, die drehbar gelagert sind, so daß eine Abriebminimierung einer Leitung, die in einem solchen Führungselement geführt wird, erreicht werden kann.

Zur Sicherung gegen eine Verschiebung des Adapters in Längsrichtung des Verbindungselementes wird vorgeschlagen, daß der Adapter wenigstens einen Vorsprung und das Verbindungselement wenigstens eine Ausnehmung aufweist, wobei der Vorsprung wenigstens teilweise in die Ausnehmung des Verbindungselementes eingreift.

Bevorzugt ist hierbei eine Ausgestaltung bei der das Verbindungselement mehrere im Abstand zueinander in Längsrichtung des Verbindungselementes ausgebildete Ausnehmungen hat. Hierdurch kann eine wahlweise Positionierung des Adapters auf dem Verbindungselement vorgenommen werden. Es können auch mehrere Adapter gegen eine Verschiebung in Längsrichtung des Verbindungselementes gesichert werden.

Vorzugsweise ist der Anlagekörper hierzu zylinderförmig ausgebildet. Insbesondere ist der Anlagekörper im wesentlichen hohl ausgebildet. Hierdurch wird eine relativ geringe Zusatzlast in das Führungselement eingebracht.

Nach einem weiteren vorteilhaften Gedanken wird vorgeschlagen, daß der Anlagekörper durch einen Profilstrang gebildet ist. Dies ermöglicht eine relativ kostengünstige Herstellung eines solchen Anlagekörpers. Der Anlagekörper kann aus Kunststoff bestehen.

Vorzugsweise ist der Anlagekörper so ausgebildet, daß dieser eine abriebfeste Oberfläche aufweist.

Vorzugsweise ist das Führungselement so ausgestaltet, daß mehrere den Kanalabschnitt netzartig unterteilende Anlagekörper vorgesehen sind. Durch diese Ausgestaltung wird die Möglichkeit geschaffen, Leitungen unterschiedlichen Querschnitts in dem Kanalabschnitt zu verlegen.

Die erfindungsgemäße Führungseinrichtung zeichnet sich durch gelenkig miteinander verbundene Führungselemente, die nach einem der Ansprüche 1 bis 13 ausgestaltet sind, aus. Weitere Vorteile und Einzelheiten der Erfindung werden anhand der in der Zeichnung dargestellten Ausführungsbeispiele erläutert. Es zeigen:
- Figur 1: schematisch ein erstes Ausführungsbeispiel eines Führungselementes in einer perspektivischen Ansicht,
- Figur 2: den Innenaufbau des Führungselementes in einer Explosionsdarstellung,
- Figur 3: den montierten Innenaufbau,
- Figur 4: schematisch in einer perspektivischen Darstellung ein zweites Ausführungsbeispiel eines Führungselementes,
- Figur 5: eine Schnittansicht entlang der Schnittlinie A-A nach Figur 4,
- Figur 6: eine Vorderansicht eines Adapters,
- Figur 7: eine Draufsicht des Adapters nach Figur 6,
- Figur 8: perspektivisch Verbindungsmittel, Adapter sowie Anlagekörper für ein Führungselement,
- Figur 9: einen Adapter in einem Führungselement nach Figur 8,
- Figur 10: ein Ausführungsbeispiel eines Adapters in einer Vorderansicht,
- Figur 11: den Adapter nach Figur 10 in einer Draufsicht,
- Figur 12: schematisch ein weiteres Ausführungsbeispiel eines Führungselementes,
- Figur 13: ein Ausführungsbeispiel eines Adapters in einer Vorderansicht,
- Figur 14: den Adapter nach Figur 13 in einer Draufsicht,
- Figur 15: einen Adapter in einer Vorderansicht,
- Figur 16: den Adapter nach Figur 15 in einer Draufsicht,
- Figur 17: einen Adapter in einer Vorderansicht,
- Figur 18: den Adapter nach Figur 17 in einer Draufsicht,
- Figur 19: ein Ausführungsbeispiel eines Adapters in einer Vorderansicht,
- Figur 20: den Adapter nach Figur 19 in einer Draufsicht,
- Figur 21: ein Führungselement mit Adaptern nach Figur 19 und Anlagekörpern,
- Figur 22: ein Schnittansicht des Führungselementes nach Figur 21,
- Figur 23: ein Führungselement in einer Vorderansicht,
- Figur 24: das Führungselement nach Figur 24 in einer Draufsicht und im Teilschnitt,
- Figur 25: eine Momentaufnahme einer Montage von Adaptern an einem Führungselement nach Figur 23,
- Figur 26: einen Adapter in einer Vorderansicht,
- Figur 27: den Adapter nach Figur 26 in einer Ansicht von unten und
- Figur 28: eine Ausführungsform einer Führungseinrichtung mit Führungselementen nach Figur 21.

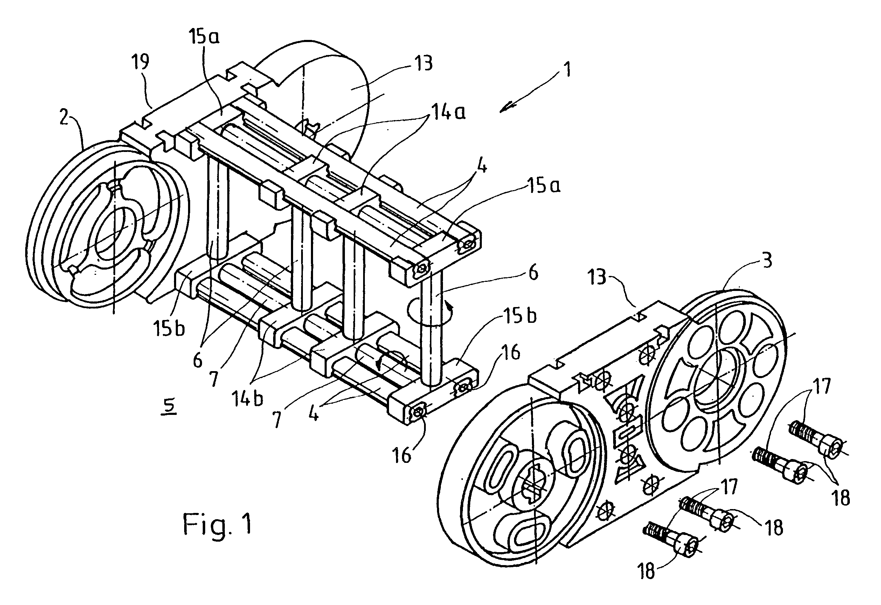

In der Figur 1 ist ein erstes Ausführungsbeispiel eines Führungselementes 1 perspektivisch dargestellt. Das Führungselement 1 weist Seitenwände 2, 3 auf, die durch Verbindungsteile 4 miteinander verbunden sind. Die Seitenwände 2, 3 und die Verbindungsteile 4 begrenzen einen Kanalabschnitt 5.

Jedes Verbindungsteil 4 weist in einer Stirnfläche eine Gewindebohrung 16 auf, in die jeweils eine Schraube 17 einschraubbar ist, wobei die Schraube 17 sich durch eine Bohrung in der Seitenwand 2 bzw. 3 hindurcherstreckt. Der Kopf 18 der Schraube 17 kommt zur Anlage an eine Außenfläche 19 der Seitenwand 2 bzw. 3.

Der Kanalabschnitt 5 ist in dem dargestellten Ausführungsbeispiel durch Anlagekörper 6 unterteilt. Jeder Anlagekörper 6 ist drehbar gelagert. Die Drehrichtung der Anlagekörper ist frei wählbar, so daß die Anlagekörper sowohl im Uhrzeigersinn als auch gegen den Uhrzeigersinn verdrehbar sind.

Jeder Anlagenkörper 6 ist über zwei Adapter 14a, 14b bzw. 15a, 15b mit den Verbindungsteilen 4 verbunden.

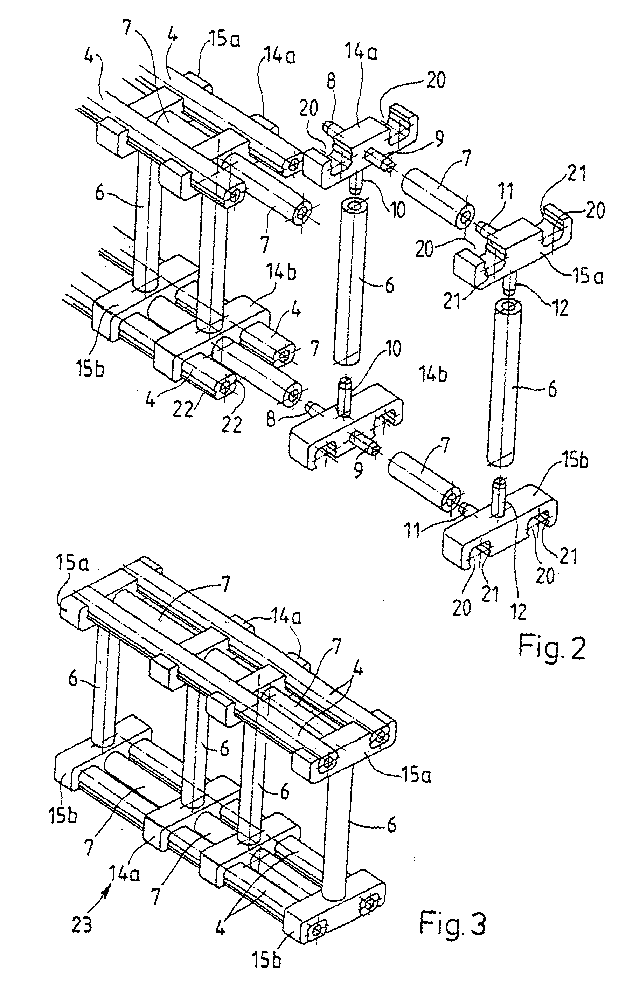

Die Figur 2 zeigt den inneren Aufbau des Führungselementes 1 in einer Montagephase. Auf den Verbindungsteilen 4 sind die Adapter 15a und 15b sowie Adapter 14a und 14b aufgeschoben. Zwischen den aufgeschobenen Adaptern 15a und 14a bzw. 15b und 14b ist jeweils eine Anlagekörper 7 angeordnet, der drehbar ist. Der Anlagekörper 7 erstreckt sich im wesentlichen in Längsrichtung der Verbindungsteile 4. Die Anlagekörper 7 sind zwischen den parallel zueinander verlaufenden Verbindungsteilen 4 positioniert. Jeder Adapter 14a, 14b weist zwei Lagerzapfen 8, 9 auf. Die Lagerzapfen 8, 9 sind koaxial zueinander ausgebildet. Sie liegen auf einer gemeinsamen Achse. Sie sind an gegenüberliegenden Flächen des Adapters 14a bzw. 14b ausgebildet. Der Zapfen 8 bzw. 9 greift in einen zylinderförmig ausgebildeten Anlagekörper ein. Zur Aufnahme des Lagerzapfens 8 bzw. 9 ist jeder Anlagekörper 7 hohl ausgebildet. Die Anlagekörper 14a, 14b weisen desweiteren einen Lagerzapfen 10 auf. Der Lagerzapfen 10 steht im wesentlichen senkrecht zu den Lagerzapfen 8, 9. Im montierten Zustand der Adapter 14a, 14b sind die Lagerzapfen 10 einander zugewandt. Jeder Lagerzapfen 10 greift in einen hohlzylinderförmig ausgebildeten Anlagekörper 6. Die Anlagekörper 6 sind drehbar um die Lagerzapfen 10 der jeweiligen Adapter 14a bzw. 14b.

Die Adapter 15a, 15b unterscheiden sich von den Adaptern 14a, 14b dadurch, daß die Adapter 15a, 15b zwei Lagerzapfen 11, 12 aufweisen, die im wesentlichen senkrecht zueinander verlaufen, wie dies aus der Figur 2 ersichtlich ist. Die Adapter 15a, 15b können zur Anlage an die Innenfläche 13 der Seitenwände 2, 3 gebracht werden. Dies ist jedoch nicht zwingend notwendig. Auf den Lagerzapfen 11, 12 sind die Anlagekörper 6 gelagert.

Die Adapter sind lösbar mit den Verbindungsteilen verbunden. In dem dargestellten Ausführungsbeispiel weist jedes Verbindungsteil einen polygonalen Querschnitt auf. Jeder Adapter 14a, 14b, 15a, 15b weist Haltenuten 20 auf, in die die jeweiligen Verbindungsteile 4 einbringbar sind. Die Adapter 14a, 14b bzw. 15a, 15b sind formschlüssig mit den Verbindungsteilen 4 verbunden. Hierzu weist jede Haltenut Rippen 21 auf, die in entsprechende Vertiefungen des Verbindungsteiles 4 eingreifen.

Im montierten Zustand bilden die Verbindungsteile 4, die Anlagekörper 6, 7 sowie die Adapter 14a, 14b, 15a, 15b eine Baueinheit 23, wie sie in der Figur 3 dargestellt ist. Diese Baueinheit kann dann mit den Seitenwänden 2, 3 verbunden werden. Der Abstand der zueinander benachbarten Anlagekörper 6 wird durch die Länge der Anlagekörper 7 bestimmt. Die Länge der Anlagekörper 7 ist frei wählbar.

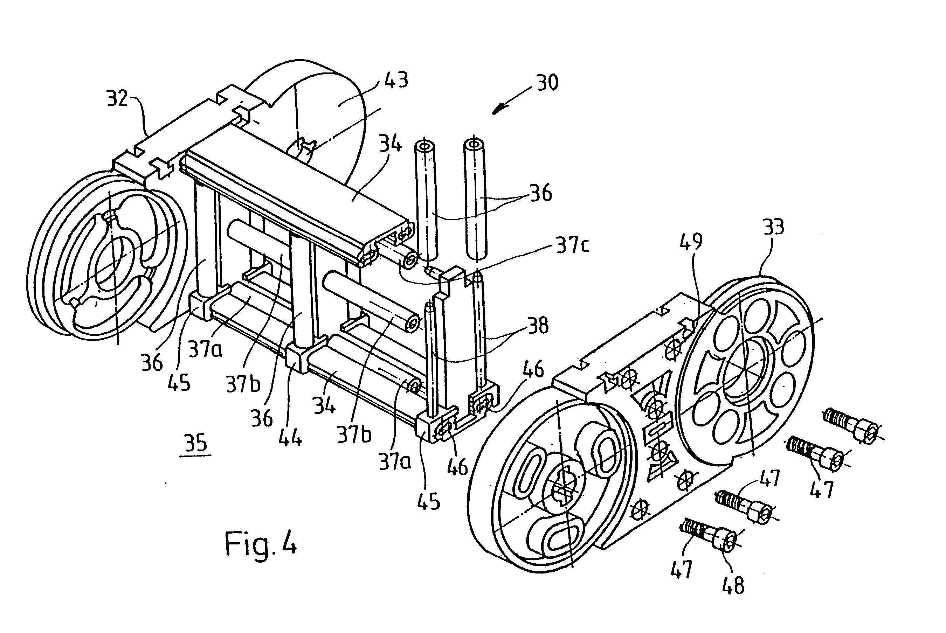

Figur 4 zeigt ein Führungselement 30. Das Führungselement 30 hat einen Kanalabschnitt 35. Der Kanalabschnitt 35 ist durch zwei voneinander beabstandete, gegenüberliegende Seitenwände 32, 33, die durch zwei voneinander beabstandete, gegenüberliegende Verbindungsteile 34 verbunden sind, begrenzt. Die Verbindungsteile 34 weisen an ihren jeweiligen Enden Bohrungen 46 auf, in die sich durch die Seitenwand 32 bzw. 33 erstreckende Schrauben 47 einschraubbar sind. Die jeweiligen Köpfe 48 der Schrauben 47 kommen im montierten Zustand zur Anlage an eine Außenfläche 49 der Seitenwand 32 bzw. der Seitenwand 33.

In dem Kanalabschnitt 35 sind Anlagekörper 36, 37a, 37b, 37c angeordnet, die als Anlage für Leitungen dienen. Die Anlagekörper 36 sind im wesentlichen senkrecht zu den Verbindungsteilen 34 angeordnet. Die Anlagekörper 37a, 37b, 37c verlaufen im wesentlichen parallel zu den Verbindungsteilen 34. Jeder Anlagekörper 36, 37a, 37b, 37c ist hohlzylinderförmig ausgebildet.

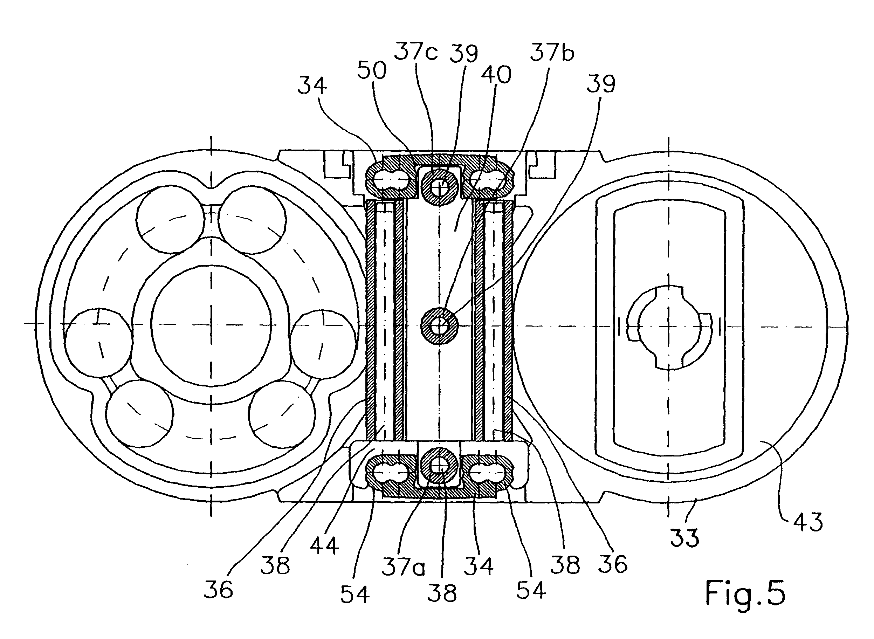

Mit den im wesentlichen parallel zueinander verlaufenden Verbindungsteilen 34 sind Adapter 44, 45 verbunden, die entsprechende Lagerzapfen aufweisen, auf denen die Anlagekörper 36, 37a, 37b, 37c gelagert sind. Aus der Figur 4 ist ersichtlich, daß der Adapter 45 zwei im wesentlichen parallel zueinander angeordnete Lagerzapfen 38 aufweist, auf denen die Anlagekörper 36 drehbar gelagert sind. Die Lagerzapfen 38 erstrecken sich im wesentlichen senkrecht zur Längsrichtung des Führungselementes 30. Die Lagerung der einzelnen Anlagekörper 36, 37a, 37b und 37c ist aus einer Schnittdarstellung des Führungselementes 30 in der Figur 5 ersichtlich. Der Adapter 44 weist zwei im Abstand zueinander und parallel zueinander verlaufende Lagerzapfen 38 auf, auf denen die Anlagekörper 36 gelagert sind. Desweiteren weist der Adapter 44 drei fluchtend übereinander angeordnete Lagerzapfen 39 auf, die zur Lagerung der entsprechenden Anlagekörper 37a, 37b und 37c dienen. Die Lagerzapfen 39 sind auf einem Steg 40 ausgebildet, die im wesentlichen parallel zu den Lagerzapfen 38 verläuft.

Der Steg 40 ist mit einem Grundkörper 41 verbunden. Das freie Ende des Stegs 40 bildet eine Lasche 42, die in eine Nut 50 des Verbindungsteils 34 eingreift. Die Nut 50 erstreckt sich im wesentlichen in Längsrichtung des Verbindungsteils 34. Eine der Lasche 42 entsprechende zweite Lasche 51 erstreckt sich von dem Grundkörper 41 in entgegengesetzter Richtung. Diese zweite Lasche 51 greift in die entsprechende Nut 50 des zweiten Verbindungsteils 34. Die Lasche 51 ist mit dem Grundkörper 41 verbunden. Der Grundkörper 42 weist zwei Haltenuten 52, 53 auf, die jeweils beidseits der Lasche 51 ausgebildet sind, auf. In die Haltenuten 52, 53 greift ein entsprechender wulstartig ausgebildeter Halteabschnitt 54 des Verbindungsteils 34. Durch die mit dem Verbindungsteil 34 zusammenwirkende Haltenuten 52, 53 und die Laschen 42, 51 wird der Adapter 44 bzw. 45 mit den Verbindungsteilen 34 verbunden.

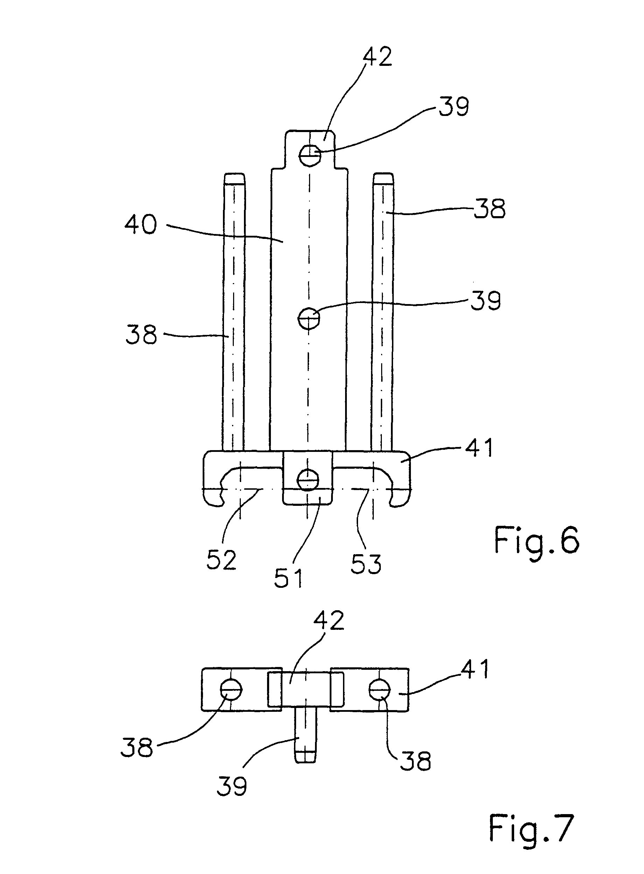

Den Aufbau eines Adapters 45 zeigen die Figuren 6 und 7. Der Adapter 45 weist lediglich an einer Fläche des Stegs 40 Lagerzapfen 39 auf. Der Adapter 44 weist zusätzlich zu den Lagerzapfen 39 weitere Lagerzapfen auf, die koaxial zu den Lagerzapfen 39 ausgebildet sind, und auf der den Lagerzapfen 39 gegenüberliegenden Fläche des Stegs 42 ausgebildet sind. Durch diese Ausgestaltung der Adapter kann eine netzartige Unterteilung des Kanalabschnitts 35 erfolgen. Ebenso wie die in den Figuren 1 bis 3 dargestellte Ausführungsform des Führungselementes kann die in den Figuren 4 bis 7 dargestellte Ausführungsform des Führungselementes 30 so aufgebaut werden, daß zunächst die Verbindungsteile 34 sowie die Adapter 38, 39 und die Anlagekörper 36, 37a, 37b, 37c zu einer Baueinheit montiert werden. Anschließend können die Seitenwände 32, 33 mit den Verbindungsteilen 34 verbunden werden.

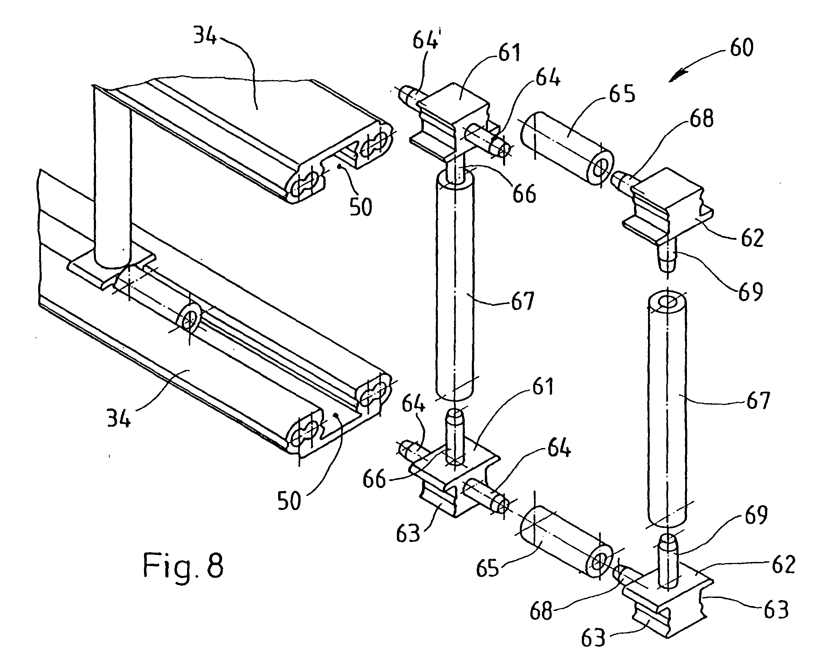

Figur 8 zeigt ein weiteres Ausführungsbeispiel eines Führungselementes 60. Der Übersichtlichkeit halber wurde auf die Darstellung der Seitenwände verzichtet. Bei den Seitenwänden kann es sich um solche Wände handeln, wie sie bei der Ausführungsform nach Figur 1 bzw. nach Figur 5 handelt.

In dem dargestellten Ausführungsbeispiel eines Führungselementes 60 sind jeweils zwei Verbindungsteile 34 vorgesehen, die den Verbindungsteilen 34 nach Figur 5 entsprechen. Wie aus der Darstellung nach Figur 4 ersichtlich ist, hat die Nut 50 eines jeden Verbindungsteils 34 eine Profilierung, die einer formschlüssigen Verbindung mit Adaptern 61, 62 dient. Jeder Adapter 61, 62 weist Seitenwände 63 auf, die eine zu der Profilierung der Nut korrespondierende Struktur aufweist.

Die Adapter 61 weisen jeweils zwei koaxial zueinander ausgebildete Lagerzapfen 64 auf. Die Lagerzapfen 64 dienen zur Lagerung der sich im wesentlichen in Längsrichtung der Verbindungsteile erstreckenden Anlagekörper 65. Wie aus der Figur 8 ersichtlich ist, liegen die Anlagekörper 65 teilweise in der Nut 50 der Verbindungsteile 34. Sie sind jedoch frei drehbar, da sie mit der Wandung der Nut 50 nicht in Kontakt stehen.

Der Adapter 61 weist ferner einen Lagerzapfen 66 auf, der im wesentlichen senkrecht zu den Lagerzapfen 64 ausgebildet ist. Die Lagerzapfen 66 der gegenüberliegenden Adapter 61 dienen zur Lagerung eines Lagerkörpers 67. Der Lagerkörper 67 steht im wesentlichen senkrecht zur Längsrichtung der Verbindungsteile 34.

Die Adapter 62 weisen jeweils nur zwei Lagerzapfen 68, 69 auf, die senkrecht zueinander stehen. Die Lagerzapfen 68 dienen zur Lagerung der Anlagekörper 65. Die Lagerzapfen 69 dienen zur Lagerung eines Anlagekörpers 67. Die Adapter 62 sind den nicht dargestellten Seitenwänden benachbart angeordnet.

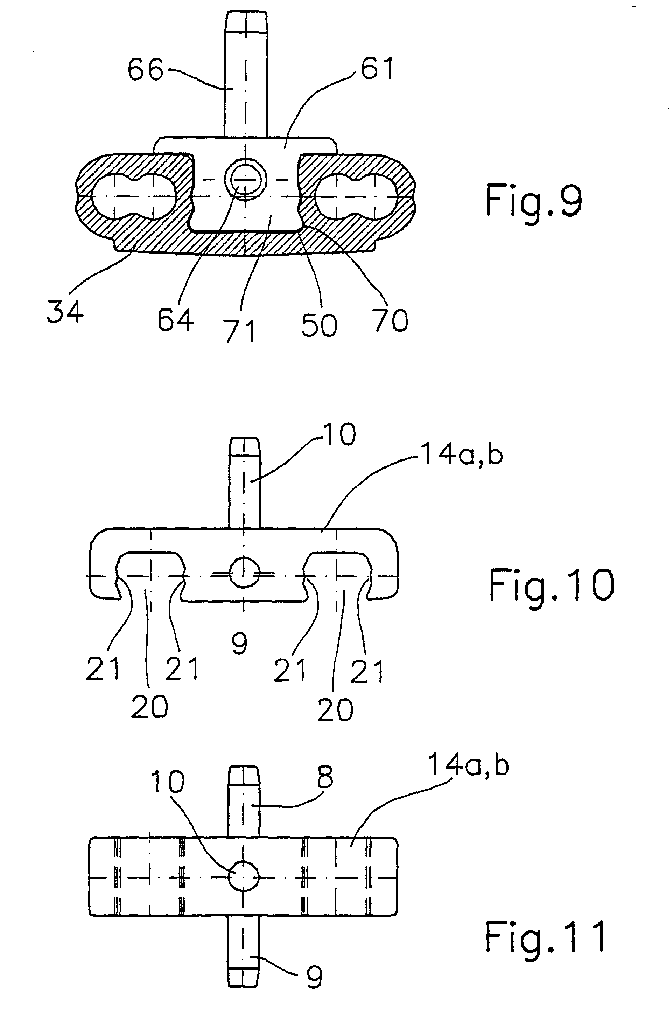

Figur 9 zeigt die Anordnung eines Adapters 61 in dem Verbindungsteil 34. Wie aus der Figur 9 ersichtlich ist, weist die Nut 50 einen schwalbenschwanzförmigen Abschnitt 70 auf, in den ein entsprechender Abschnitt 71 des Adapters 61 eingreift, so daß eine formschlüssige Verbindung zwischen dem Adapter 61 und dem Verbindungsteil 34 besteht, so daß der Adapter 61 gegen ein Abzug senkrecht zur Längsachse des Verbindungsteils 34 gesichert ist. Der Adapter 61 ist in Längsrichtung der Nut 50 verschieblich.

Bei den vorstehend beschriebenen Ausführungsformen von Führungselementen sind Anlagekörper vorgesehen worden, die sowohl in der Nachbarschaft der Seitenwände als auch die den Kanalquerschnitt unterteilende Anlagenkörper aufweisen.

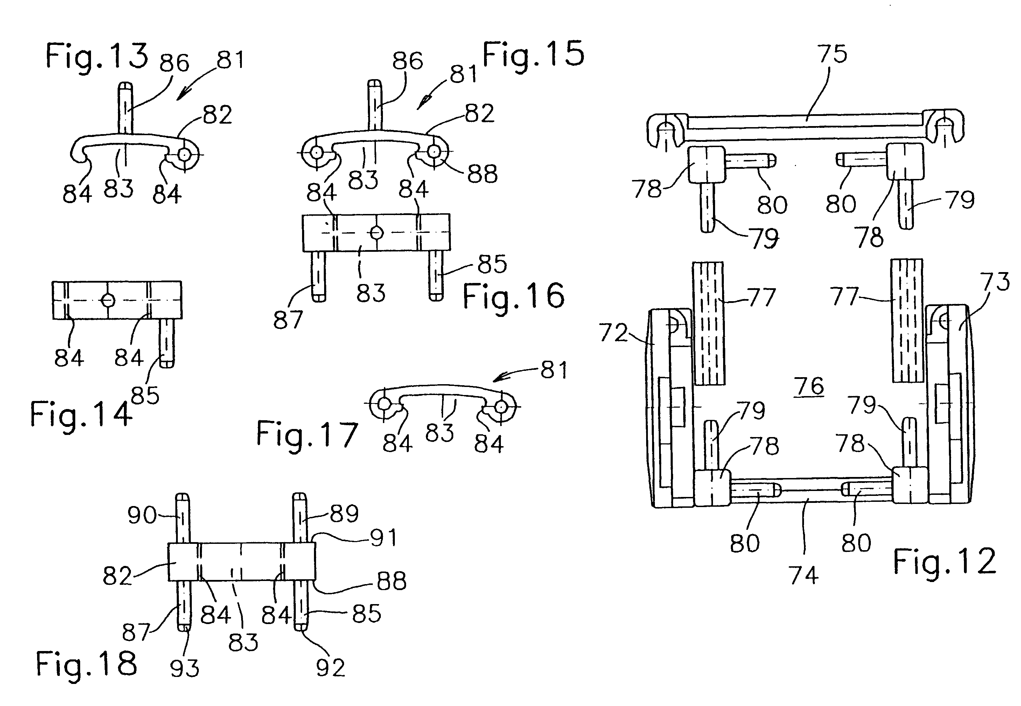

In der Figur 12 ist eine Ausrührungsform eines Führungselementes dargestellt, welches Seitenwände 72, 73 aufweist, die durch ein Verbindungsteil 74 und ein lösbar mit den Seitenwänden 72, 73 verbundenes Verbindungselement 75 aufweist. In dem Kanalabschnitt 76 sind Anlagekörper 77 vorgesehen, die sich im wesentlichen senkrecht zu den Verbindungsteilen 74, 75 erstrecken. Die Anlagekörper 77 sind über Adapter 78, die entsprechende Lagerzapfen 79 aufweisen, drehbar gelagert. Jeder Adapter 78 weist ferner einen Lagerzapfen 80 auf, der im wesentlichen parallel zu den Verbindungsteilen 74, 75 verlaufen. Auf diese Lagerzapfen 74 ist jeweils ein nicht dargestellter Anlagekörper aufbringbar. Der übrige Querschnitt des Kanalabschnitts 76 ist frei. Durch diese Anordnung wird vermieden, daß die in dem Kanalabschnitt 76 angeordneten Leitungen durch eine Relativbewegung an den Innenflächen der Seitenwände 72, 73 reiben. Entsprechendes wird auch bei den vorstehend dargestellten Ausführungsformen erreicht. Die Adapter 78 sind an die Kontur der Verbindungsteile 74, 75 angepaßt, so daß diese sicher und zuverlässig gehaltert werden.

In den Figuren 13 bis 20 sind unterschiedliche Variationen eines Adapters 81 dargestellt. Der Adapter 81 weist einen Grundkörper 82 auf, der eine Haltenut 83 mit einander zugewandeten Rastnasen 84 aufweist, die sich in Längsrichtung der Haltenut 83 erstrecken.

Figur 13 zeigt eine erste Variante des Adapters 81. Der Adapter 81 weist zwei Lagerzapfen 85, 86 auf. Die Lagerzapfen 85, 86 sind im wesentlichen senkrecht zueinander ausgebildet.

Figur 15 und 16 zeigen eine zweite Variante des Adapters 81. Der prinzipielle Aufbau des Adapters 81 stimmt mit dem Aufbau des in den Figuren 13 und 14 dargestellten Adapters 81 überein. Der Adapter 81 nach Figur 15 bzw. 16 weist drei Lagerzapfen 86, 85, 87 auf. Die Lagerzapfen 85, 87 sind im wesentlichen parallel zueinander ausgebildet. Sie erstrecken sich von einer gemeinsamen Seitenfläche 88 des Grundkörpers 82 weg. Der Adapter 81 weist ferner einen im wesentlichen senkrecht auf einer durch die Lagerzapfen 85, 87 aufgespannten Fläche stehenden Lagerzapfen 86 auf.

Figuren 17 und 18 zeigen ein drittes Ausführungsbeispiel des Adapters 81. Der Adapter 81 weist vier Lagerzapfen 85, 87, 89, 90 auf. Die Lagerzapfen 85, 87 verlaufen im wesentlichen parallel zueinander. Sie sind beidseits der Haltenut 83 ausgebildet. Die Lagerzapfen 85, 87 erstrecken sich von der gemeinsamen Fläche 88 des Grundkörpers 82 weg.

Die Lagerzapfen 89, 90 sind parallel zueinander ausgebildet. Sie erstrecken sich von einer der Fläche 88 des Grundkörpers 82 gegenüberliegenden Fläche weg. Auch die Lagerzapfen 89, 90 sind beidseits der Haltenut 83 ausgebildet. Die Lagerzapfen 85, 89 liegen auf einer gemeinsamen Achse 82. Die Lagerzapfen 87, 90 liegen auf einer gemeinsamen Achse 93.

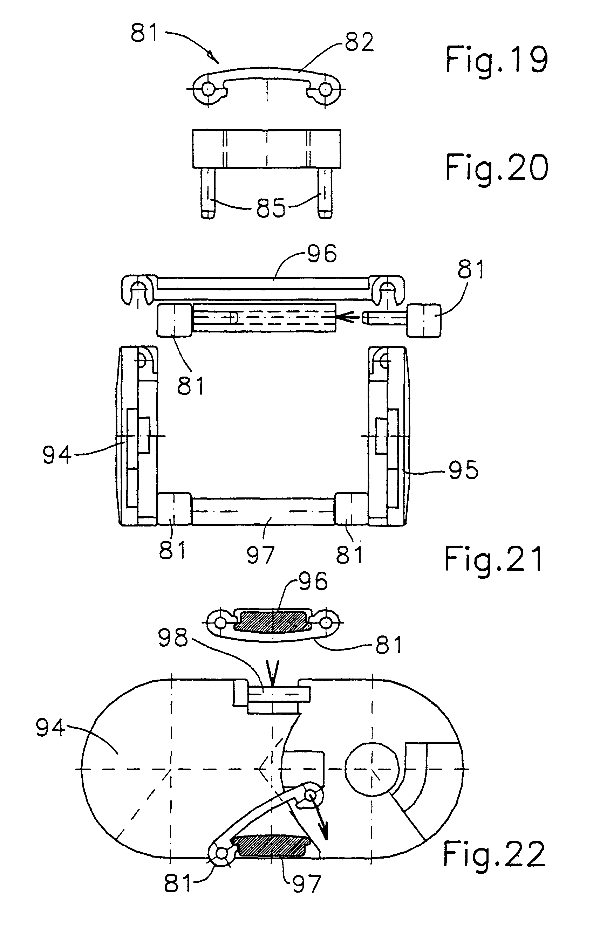

In den Figuren 19 und 20 ist eine weitere Ausgestaltung eines Adapters 81 dargestellt. Dieser Adapter 81 entspricht im wesentlichen der Ausgestaltung des Adapters 81 nach Figur 15 und 16, wobei auf einen Lagerzapfen 86 verzichtet worden ist.

Wir kommen nunmehr auf die in den Figuren 21, 22 dargestellte Ausführungsform eines Führungselementes.

Die in den Figuren 21, 22 dargestellte Ausführungsform eines Führungselementes weist Seitenwände 94, 95 auf, die durch die Verbindungsteile 96, 97 miteinander verbunden sind. Das Verbindungsteil 96 ist schwenkbar um eine an der Seitenwand 94 ausgebildete Achse 98. Die Verbindungsteile 96, 97 dienen zur Halterung von Adaptern 81, wie aus der Figur 22 ersichtlich ist. Bei den Adaptern 81 handelt es sich um die in der Figur 19 bzw. 20 dargestellten Adapter. Figur 22 zeigt auch, daß die Rastnasen 84 an den entsprechenden Anlageflächen des Verbindungsteils 96 bzw. 97 eingreifen, so daß die Adapter 81 an den Verbindungsteilen 96, 97 gehaltert sind. Die Verbindungsteile 96, 97 greifen hierbei in die Nut 83 der entsprechenden Adapter 81. Die Adapter 81 und die zwischen den Adaptern 81 angeordnete Anlagekörper 99 können gemeinsam mit dem Adapter 96 um die Achse 98 verschwenkt werden.

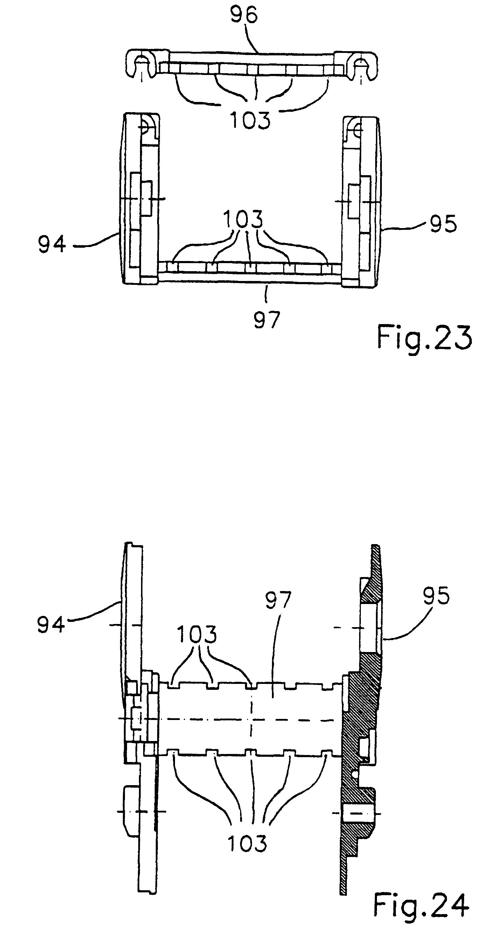

Die Figuren 23, 24 zeigen eine Ausführungsform eines Führungselementes. Der prinzipielle Aufbau des Führungselementes entspricht im wesentlichen der Ausgestaltung des in den Figuren 21, 22 dargestellten Führungselementes. Auch dieses Führungselement weist Seitenwände 94, 95 auf, die durch Verbindungsteile 96, 97 verbunden sind. Die Verbindungsteile 96, 97 dienen zur Halterung von Adaptern 81. Die Verbindungsteile 96, 97 sind dahingehend modifiziert, als daß sie Ausnehmungen 103 aufweisen. Insbesondere aus der Figur 24 ist ersichtlich, daß die Ausnehmungen 103 an den Längsrändern des Verbindungsteils 96 ausgebildet sind. Es sind mehrere im Abstand zueinander ausgebildete Ausnehmungen 103 vorgesehen. Auch das Verbindungsteil 97 weist entsprechende Ausnehmungen auf. Im montierten Zustand fluchten die Ausnehmungen 103 des Verbindungsteils 96 mit den Ausnehmungen 103 des Verbindungsteils 97. Die Ausnehmungen dienen zur Sicherung eines Adapters 81 gegen eine Verschiebung in Längsrichtung des Verbindungsteils 96 bzw. 97. Hierzu weist der Adapter 81 Vorsprünge 104 auf, die korrespondierend zu den Ausnehmungen 103 ausgebildet sind.

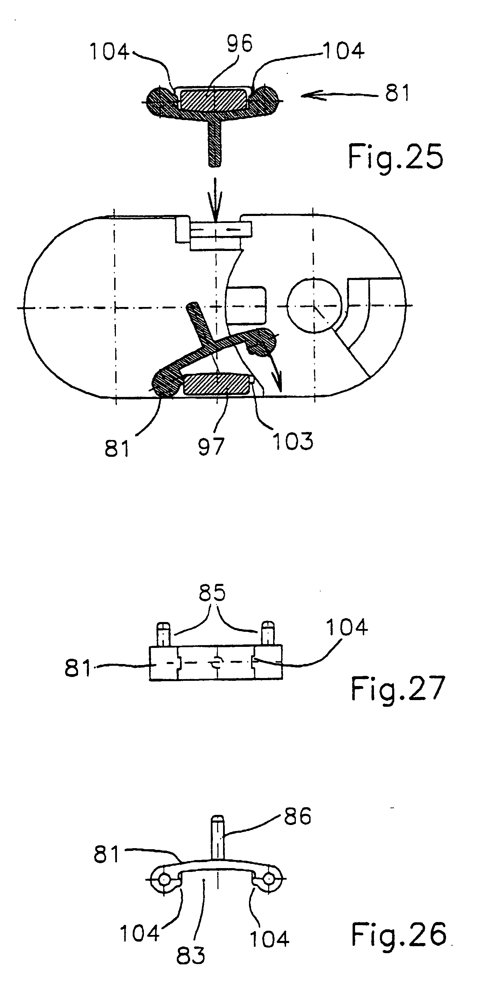

Insbesondere aus der Figur 25 ist ersichtlich, daß die Vorsprünge 104 in die Ausnehmungen 103 eingreifen.

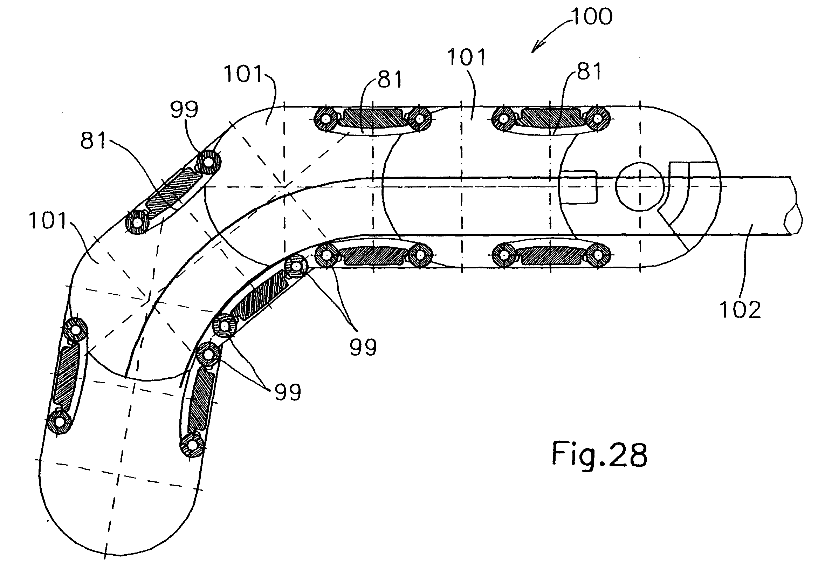

Figur 28 zeigt eine Ausführungsform einer Führungseinrichtung. Die Führungseinrichtung 100 weist mehrere gelenkig miteinander verbundene Führungselemente 101 auf. Die Ausgestaltung der Führungselemente 101 entspricht im wesentlichen der in der Figur 21 bzw. 22 dargestellten Ausführungsform eines Führungselementes. In der Figur 23 ist ferner eine Leitung 102 dargestellt. Wie aus der Darstellung nach Figur 23 ersichtlich ist, liegt die Leitung 102 im gekrümmten Bereich der Führungseinrichtung 100 an den Anlagekörpern 99. Bei einer Relativbewegung der Führungselemente 101 bezüglich der Leitung 103 kommt es zu einer Rollbewegung der Anlagekörper 99, wodurch ein Abrieb der Leitung nicht stattfindet.

### Bezugszeichenliste

- 1: Führungselement
- 2,3: Seitenwand
- 4: Verbindungsteil
- 5: Kanalabschnitt
- 6,7: Anlagekörper
- 8,9,10,11,12: Lagerzapfen
- 13: Innenfläche
- 14a, 14b: Adapter
- 15a, 15b: Adapter
- 16: Bohrung
- 17: Schraube
- 18: Kopf
- 19: Außenfläche
- 20: Haltenut
- 21: Rippe
- 22: Vertiefung
- 23: Baueinheit
- 30: Führungselement
- 32,33: Seitenwand
- 34: Verbindungsteil
- 35: Kanalabschnitt
- 36,37a,37b,37c: Anlagekörper
- 38,39: Lagerzapfen
- 40: Steg
- 41: Grundkörper
- 42: Lasche
- 43: Innenfläche
- 44,45: Adapter
- 46: Bohrung
- 47: Schraube
- 48: Kopf
- 49: Außenfläche
- 50: Nut
- 51: Lasche
- 52,53: Haltenut
- 60: Führungselement
- 61,62: Adapter
- 63: Seitenwand
- 64: Lagerzapfen
- 65: Anlagekörper
- 66: Lagerzapfen
- 67: Anlagekörper
- 68,69: Lagerzapfen
- 70, 71: Abschnitt
- 72,73: Seitenwand
- 74,75: Verbindungsteil
- 76: Kanalabschnitt
- 77: Anlagekörper
- 78: Adapter
- 79,80: Lagerzapfen
- 81: Adapter
- 82: Grundkörper
- 83: Haltenut
- 84: Rastnase
- 85,86,87: Lagerzapfen
- 88: Fläche
- 89,90: Lagerzapfen
- 91: Fläche
- 92,93: Achse
- 94,95: Seitenwand
- 96,97: Verbindungsteil
- 98: Schwenkachse
- 99: Lagerkörper
- 100: Führungseinrichtung
- 101: Führungselemente
- 102: Leitung
- 103: Ausnehmung
- 104: Vorsprung

## Patentansprüche

1. Führungselement (1, 30, 60, 101) mit einem Kanalabschnitt (5, 35, 76), insbesondere zur Aufnahme von Leitungen, wobei der Kanalabschnitt (5, 35, 76) durch zwei voneinander beabstandete, gegenüberliegende Seitenwände (2, 3, 32, 33, 63, 72, 73, 94, 95), die durch wenigstens ein Verbindungselement (4, 34, 74, 96, 97) verbunden sind, begrenzt ist, und mit wenigstens einem in dem Kanalabschnitt (5, 35, 76) angeordneten, drehbar gelagerten Anlagekörper (6, 7, 36, 37,a, 37b, 37c, 65, 77, 99), **gekennzeichnet durch** wenigstens einen mit wenigstens einem Verbindungselement (4, 34, 74, 96, 97) und/oder einer Seitenwand (2, 3, 32, 33, 63, 72, 73, 94, 95) verbindbaren Adapter (14a, 14b, 15a, 15b, 44, 45, 61, 62, 78, 81), der wenigstens einen wenigstens teilweise in einen Anlagekörper (6, 7, 36, 37,a, 37b, 37c, 65, 77, 99) hineinragenden Lagerzapfen (8, 9, 10, 11, 38, 39, 64, 66, 68, 69, 79, 80, 85, 86, 87,89, 90) aufweist.

2. Führungselement nach Anspruch 1, **dadurch gekennzeichnet, daß** der Adapter (14a, 14b, 15a, 15b, 44, 45, 61, 62, 78, 81) wenigstens zwei Lagerzapfen (8, 9, 10, 11, 38, 39, 64, 66, 68, 69, 79, 80, 85, 86, 87,89, 90) aufweist, die im wesentlichen senkrecht zueinander verlaufen.

3. Führungselement nach Anspruch 1 oder 2, **dadurch gekennzeichnet, daß** der Adapter (14a, 14b, 15a, 15b, 44, 45, 61, 62, 78, 81) wenigstens zwei Lagerzapfen (8, 9, 10, 11, 38, 39, 64, 66, 68, 69, 79, 80, 85, 86, 87,89, 90) aufweist, die im wesentlichen parallel zueinander verlaufen.

4. Führungselement nach Anspruch 1, 2 oder 3, **dadurch gekennzeichnet, daß** der Adapter (14a, 14b, 15a, 15b, 44, 45, 61, 62, 78, 81) wenigstens zwei Lagerzapfen (8, 9, 10, 11, 38, 39, 64, 66, 68, 69, 79, 80, 85, 86, 87,89, 90) aufweist, die im wesentlichen koaxial zueinander verlaufen.

5. Führungselement nach einem der Ansprüche 1 bis 4, **dadurch gekennzeichnet, daß** der Adapter (14a, 14b, 15a, 15b, 44, 45, 61, 62, 78, 81) form- oder kraftschlüssig mit wenigstens einem Verbindungselement (4, 34, 74, 96, 97) verbindbar ist.

6. Führungselement nach Anspruch 5, **dadurch gekennzeichnet, daß** der Adapter (14a, 14b, 15a, 15b) wenigstens eine Haltenut (20) aufweist, in die wenigstens ein Verbindungselement (4) wenigstens teilweise eingreift.

7. Führungselement nach Anspruch 5 oder 6, **dadurch gekennzeichnet, daß** der Adapter (81) wenigstens einen Vorsprung (104) und das Verbindungselement (96, 97) wenigstens eine Ausnehmung (103) aufweist, wobei der Vorsprung (104) zur Sicherung gegen eine Verschiebung des Adapters (81) in Längsrichtung des Verbindungselementes (96, 97) wenigstens teilweise in eine Ausnehmung (103) des Verbindungselementes (96, 97) eingreift.

8. Führungselement nach einem der Ansprüche 1 bis 7, **dadurch gekennzeichnet, daß** der Anlagekörper (6, 7, 36, 37,a, 37b, 37c, 65, 77, 99) zylinderförmig ausgebildet ist.

9. Führungselement nach einem der Ansprüche 1 bis 8, **dadurch gekennzeichnet, daß** der Anlagekörper (6, 7, 36, 37,a, 37b, 37c, 65, 77, 99) im wesentlichen hohl ausgebildet ist.

10. Führungselement nach Anspruch 9, **dadurch gekennzeichnet, daß** der Anlagekörper (6, 7, 36, 37,a, 37b, 37c, 65, 77, 99) durch einen Profilstrang gebildet ist.

11. Führungselement nach einem der Ansprüche 1 bis 10, **dadurch gekennzeichnet, daß** der Anlagekörper (6, 7, 36, 37,a, 37b, 37c, 65, 77, 99) aus einem Kunststoff besteht.

12. Führungselement nach einem der Ansprüche 1 bis 11, daß der Anlagekörper (6, 7, 36, 37,a, 37b, 37c, 65, 77, 99) eine abriebfeste Oberfläche aufweist.

13. Führungselement nach einem der Ansprüche 1 bis 12, **dadurch gekennzeichnet, daß** mehrere den Kanalabschnitt (5, 35, 76) netzartig unterteilende Anlagekörper (6, 7, 36, 37,a, 37b, 37c, 65, 77, 99) vorgesehen sind.

14. Führungseinrichtung, insbesondere zum Führen von Leitungen, mit gelenkig miteinander verbundenen Führungselementen (101) nach einem der Ansprüche 1 bis 13.

## Claims

1. A guide element (1, 30, 60, 101) having a passage portion (5, 35, 76), in particular for accommodating lines, wherein the passage portion (5, 35, 76) is delimited by two mutually spaced, mutually oppositely disposed side walls (2, 3, 32, 33, 63, 72, 73, 94, 95) which are connected by at least one connecting element (4, 34, 74, 96, 97), and at least one rotatably mounted supporting body (6, 7, 36, 37a, 37b, 37c, 65, 77, 79) arranged in the passage portion (5, 35, 76), **characterized by** at least one adaptor (14a, 14b, 15a, 15b, 44, 45, 61, 62, 78, 81) which can be connected to at least one connecting element (4, 34, 74, 96, 97) and/or a side wall (2, 3, 32, 33, 63, 72, 73, 94, 95) and which has at least one mounting journal (8, 9, 10, 11, 38, 39, 64, 66, 68, 69, 79, 80, 85, 86, 87, 89, 90) which at least partially extends into the supporting body (6, 7, 36, 37a, 37b, 37c, 65, 77, 99).

2. A guide element according to claim 1 **characterized in that** the adaptor (14a, 14b, 15a, 15b, 44, 45, 61, 62, 78, 81) has at least two mounting journals (8, 9, 10, 11, 38, 39, 64, 66, 68, 69, 79, 80, 85, 86, 87, 89, 90) which extend in substantially mutually perpendicular relationship.

3. A guide element according to claim 1 or 2 **characterized in that** the adaptor (14a, 14b, 15a, 15b, 44, 45, 61, 62, 78, 81) has at least two mounting journals (8, 9, 10, 11, 38, 39, 64, 66, 68, 69, 79, 80, 85, 86, 87, 89, 90) which extend in substantially mutually parallel relationship.

4. A guide element according to claim 1, 2 or 3 **characterized in that** the adaptor (14a, 14b, 15a, 15b, 44, 45, 61, 62, 78, 81) has at least two mounting journals (8, 9, 10, 11, 38, 39, 64, 66, 68, 69, 79, 80, 85, 86, 87, 89, 90), which extend in substantially mutually coaxial relationship.

5. A guide element according to one of claims 1 to 4 **characterized in that** the adaptor (14a, 14b, 15a, 15b, 44, 45, 61, 62, 78, 81) can be connected in positively locking relationship or in force-locking relationship to at least one connecting element (4, 34, 74, 96, 97).

6. A guide element according to claim 5 **characterized in that** the adaptor (14a, 14b, 15a, 15b) has at least one holding groove (20) into which at least one connecting element (4) at least partially engages.

7. A guide element according to claim 5 or 6 **characterized in that** the adaptor (81) has at least one projection (104) and the connecting element (96, 97) has at least one recess (103), wherein the projection (104) at least partially engages into a recess (103) of the connecting element (96, 97) to secure against displacement of the adaptor (81) in the longitudinal direction of the connecting element (96, 97).

8. A guide element according to one of claims 1 to 7 **characterized in that** the supporting body (6, 7, 36, 37a, 37b, 37c, 65, 77, 99) is of a cylindrical configuration.

9. A guide element according to one of claims 1 to 8 **characterized in that** the supporting body (6, 7, 36, 37a, 37b, 37c, 65, 77, 99) is of a substantially hollow configuration.

10. A guide element according to claim 9 **characterized in that** the supporting body (6, 7, 36, 37a, 37b, 37c, 65, 77, 99) is formed by an extrusion.

11. A guide element according to one of claims 1 to 10 **characterized in that** the supporting body (6, 7, 36, 37a, 37b, 37c, 65, 77, 99) comprises a plastic material.

12. A guide element according to one of claims I to 11 **characterized in that** the supporting body (6, 7, 36, 37a, 37b, 37c, 65, 77, 99) has an abrasion-resistant surface.

13. A guide element according to one of claims 1 to 12 **characterized in that** there are provided a plurality of supporting bodies (6, 7, 36, 37a, 37b, 37c, 65, 77, 99), which subdivide the passage portion (5, 35, 76) in a net-like arrangement.

14. A guide device, in particular for guiding lines, with hingedly interconnected guide elements (101) according to one of claims 1 to 13.

## Revendications

1. Elément de guidage (1, 30, 60, 101) avec une section de canal (5, 35, 76), notamment pour recevoir des lignes, dans quel cas la section de canal (5, 35, 76) est limitée par deux parois latérales (2, 3, 32, 33, 63, 72, 73, 94, 95) opposées et à distance l'une de l'autre, qui sont reliées par au moins un élément de liaison (4, 34, 74, 96, 97), et avec au moins un corps d'application (6, 7, 36, 37a, 37b, 37c, 65, 77, 99) monté de manière rotative et agencé dans la section de canal (5, 35, 76), **caractérisé par** au moins un adaptateur (14a, 14b, 15a, 15b, 44, 45, 61, 62, 78, 81) pouvant être relié à au moins un élément de liaison (4, 34, 74, 96, 97) et/ou à une paroi latérale (2, 3, 32, 33, 63, 72, 73, 94, 95), lequel adaptateur (14a, 14b, 15a, 15b, 44, 45, 61, 62, 78, 81) présente au moins un tenon de logement (8, 9, 10, 11, 38, 39, 64, 66, 68, 69, 79, 80, 85, 86, 87, 89, 90), s'étendant au moins partiellement dans un corps d'application (6, 7, 36, 37a, 37b, 37c, 65, 77, 99).

2. Elément de guidage selon la revendication 1, **caractérisé en ce que** l'adaptateur (14a, 14b, 15a, 15b, 44, 45, 61, 62, 78, 81) présente au moins deux tenons de logement (8, 9, 10, 11, 38, 39, 64, 66, 68, 69, 79, 80, 85, 86, 87, 89, 90) qui s'étendent sensiblement de manière perpendiculaire l'un à l'autre.

3. Elément de guidage selon la revendication 1 ou 2, **caractérisé en ce que** l'adaptateur (14a, 14b, 15a, 15b, 44, 45, 61, 62, 78, 81) présente au moins deux tenons de logement (8, 9, 10, 11, 38, 39, 64, 66, 68, 69, 79, 80, 85, 86, 87, 89, 90) qui s'étendent sensiblement de manière parallèle l'un à l'autre.

4. Elément de guidage selon la revendication 1, 2 ou 3, **caractérisé en ce que** l'adaptateur (14a, 14b, 15a, 15b, 44, 45, 61, 62, 78, 81) présente au moins deux tenons de logement (8, 9, 10, 11, 38, 39, 64, 66, 68, 69, 79, 80, 85, 86, 87, 89, 90) qui s'étendent sensiblement de manière coaxiale l'un à l'autre.

5. Elément de guidage selon l'une des revendications 1 à 4, **caractérisé en ce que** l'adaptateur (14a, 14b, 15a, 15b, 44, 45, 61, 62, 78, 81) peut être relié à au moins un élément de guidage (4, 34, 74, 96, 97) par coopération de formes ou par coopération de forces.

6. Elément de guidage selon la revendication 5, **caractérisé en ce que** l'adaptateur (14a, 14b, 15a, 15b) présente au -moins une rainure de support (20) dans laquelle s'engage au moins partiellement au moins un élément de liaison (4).

7. Elément de guidage selon la revendication 5 ou 6, **caractérisé en ce que** l'adaptateur (81) a au moins une saillie (104) et l'élément de liaison (96, 97) au moins un dégagement (103), dans quel cas pour la protection contre un déplacement de l'adaptateur (81) en direction longitudinale de l'élément de liaison (96, 97) la saillie (104) s'engage au moins partiellement dans un dégagement (103) de l'élément de liaison (96, 97).

8. Elément de guidage selon l'une des revendications 1 à 7, **caractérisé en ce que** le corps d'application (6, 7, 36, 37a, 37b, 37c, 65, 77, 99) est réalisé de forme cylindrique.

9. Elément de guidage selon l'une des revendications 1 à 8, **caractérisé en ce que** le corps d'application (6, 7, 36, 37a, 37b, 37c, 65, 77, 99) est réalisé sensiblement de façon creuse.

10. Elément de guidage selon la revendication 9, **caractérisé en ce que** le corps d'application (6, 7, 36, 37a, 37b, 37c, 65, 77, 99) est réalisé par un profilé.

11. Elément de guidage selon l'une des revendications 1 à 10, **caractérisé en ce que** le corps d'application (6, 7, 36, 37a, 37b, 37c, 65, 77, 99) est constitué d'une matière plastique.

12. Elément de guidage selon l'une des revendications 1 à 11, **caractérisé en ce que** le corps d'application (6, 7, 36, 37a, 37b, 37c, 65, 77, 99) présente une surface résistante à l'abrasion.

13. Elément de guidage selon l'une des revendications 1 à 12, **caractérisé en ce que** plusieurs corps d'application (6, 7, 36, 37a, 37b, 37c, 65, 77, 99), divisant en réseau la section de canal (5, 35, 76), sont prévus.

14. Dispositif de guidage, notamment pour le guidage de lignes, comportant des éléments de guidage (101) selon l'une des revendications 1 à 13, reliés entre-eux de manière articulée.
